# EUROPEAN PATENT APPLICATION

(11) **EP 3 706 068 A1**
(43) Date of publication of application: **09.09.2020**
(21) Application number: 17930864.8
(22) Date of filing: 30.10.2017
(51) Int. Cl.: G06T 1/00, G06Q 50/16

(54) **LAND USE DETERMINATION SYSTEM, LAND USE DETERMINATION METHOD AND PROGRAM**

(71) Applicant: Optim Corporation, Saga-shi, Saga 840-0047 (JP)
(72) Inventor: SUGAYA Shunji, Tokyo 105-0022 (JP); TOMOHIRO Kazuo, Tokyo 105-0022 (JP); KYUSAKA Takeshi, Tokyo 105-0022 (JP)
(74) Representative: Plougmann Vingtoft a/s
(86) International application number: PCT/JP2017/039122
(87) International publication number: WO 2019/087248

(57) **Abstract**

A captured image is analyzed and it is determined whether a land is used for the same use as a registered use. A land use determination system for determining whether a land is used for a same use as a registered use includes an image acquiring unit that acquires an image obtained by image-capturing a land, an address specifying unit that analyzes the image to specify an address of the land, a use specifying unit that analyzes the image to specify a use for which the land is used, and a determining unit that determines whether a registered use of the land based on the address matches the use of the land specified by the analysis.

## Description

### TECHNICAL FIELD

The present invention relates to a land use determination system, a land use determination method, and a program for determining whether land is actually used for the same use as a registered use.

### BACKGROUND ART

In recent years, techniques for analyzing images and investigating land uses have been developed. For example, there is provided a land use area calculation device for calculating land area by use by associating it with address information, by performing image analysis on an aerial photograph (Patent Document 1).

### PRIOR ART DOCUMENT

### PATENT DOCUMENT

Patent Document 1: Japanese Patent Application Publication No. 2015-79412

### SUMMARY OF THE INVENTION

### TECHNICAL PROBLEM

However, the device of Patent Document 1 relates to a technique for acquiring the type and the total amount of work needed for decontamination, and there is a problem that it cannot determine whether the land is used according to the registered use.

In view of the above problems, an object of the present invention is to provide a land use determination system, a land use determination method, and a program for analyzing a captured image to determine whether the land is used for the same use as a registered use.

### TECHNICAL SOLUTION

The present invention provides the following solutions.

An invention according to a first aspectprovides a land use determination system for determining whether a land is used for a same use as a registered use, including an image acquiring unit that acquires an image obtained by image-capturing a land, an address specifying unit that analyzes the image to specify an address of the land, a use specifying unit that analyzes the image to specify a use for which the land is used, and a determining unit that determines whether a registered use of the land based on the address matches the use of the land specified by the analysis.

An invention according to a first aspect provides a land use determination method of determining whether a land is used for a same use as a registered use, including acquiring an image obtained by image-capturing a land, analyzing the image to specify an address of the land, analyzing the image to specify a use for which the land is used, and determining whether a registered use of the land based on the address matches the use of the land specified by the analysis.

An invention according to a first aspect provides a program for causing a computer to execute acquiring an image obtained by image-capturing a land, analyzing the image to specify an address of the land, analyzing the image to specify a use for which the land is used, and determining whether a registered use of the land based on the address matches the use of the land specified by the analysis.

### EFFECTS OF THE INVENTION

It is possible to determine whether predetermined land is actually used according to a registered use.

### BRIEF DESCRIPTION OF THE DRAWINGS

FIG. 1 is a schematic diagram of a land use determination system.
FIG. 2 is an example in which a use of a land is determined.

### DETAILED DESCRIPTION OF THE EMBODIMENTS

Hereinafter, embodiments for carrying out the present invention are described with reference to the drawings. It is to be understood that the embodiments are merely examples and the scope of the present invention is not limited to the disclosed embodiments.

A land use determination system of the present invention is a system for determining whether land is used for the same use as a registered use.

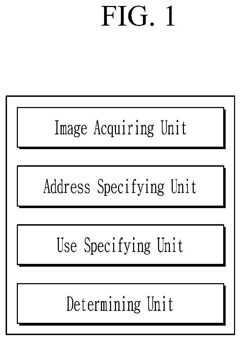

An overview of a preferred embodiment of the present invention is described with reference to FIG. 1. FIG. 1 is a schematic diagram of a land use determination system according to a preferred embodiment of the present invention.

As shown in FIG. 1, the land use determination system includes an image acquiring unit, an address specifying unit, a use specifying unit, and a determining unit, which are realized by the control unit reading a predetermined program. These unit may be application-based units, cloud-based unit, or otherwise. Each unit described above may be realized by a single computer or may be realized by two or more computers (for example, a case of a server and a terminal).

The image acquiring unit acquires an image obtained by image-capturing a land. The image may be a moving image or a still image. The image may be an image captured by a camera of a drone or a camera of a satellite. The camera provided in the drone may be any camera, such as a digital camera or a smartphone camera. When the image is analyzed in real-time, it is preferable that the image is a real-time image.

The address specifying unit analyzes the image to specify an address of the land. It is possible to specify the address using an area and shape of the land, by analyzing the image based on latitude and longitude information of the image. The accuracy of image analysis can be improved by machine learning. For example, the machine learning is performed by using past images as teacher data.

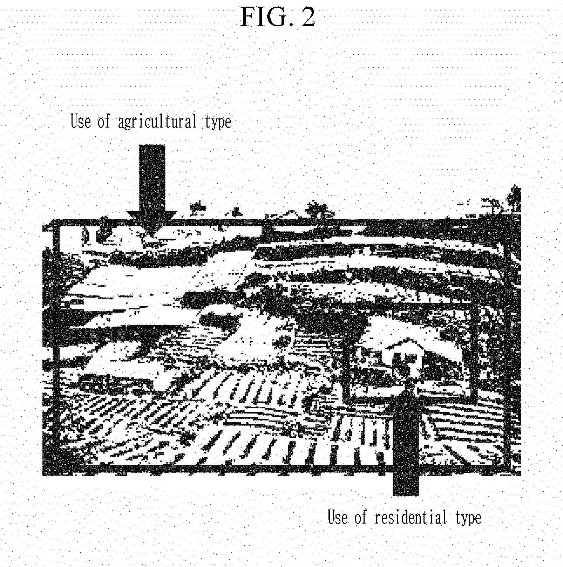

The use specifying unit analyzes the image to specify what type of use the land is used for. The use specifying unit may specify which type of the use the land is used for among a public type, a residential type, a commercial type, an industrial type, and an agricultural type, through the image analysis. For example, as shown in FIG. 2, in a case of an image of a field, it is specified that the land is used for the use of the agricultural type and the use of the residential type.

In addition, the use specifying unit may specify which type of use the land is used for, by analyzing the image to specify a type of crop grown on the land. For example, the use specifying unit can specify whether the land is a private residence or a field by performing the image analysis of whether the crop is weeds or cabbage.

Further, the use specifying unit may specify which type of use the land is used for, by analyzing an image to specify a growth status of the crop grown on the land. For example, the use specifying unit can specify whether the land is the private residence or the field by performing the image analysis of whether the crop is the weeds that have been overgrown or the cabbage that has grown deliciously.

Furthermore, the use specifying unit may specify which type of use the land is used for, by analyzing an image to specify a building built on the land. For example, the use specifying unit can specify whether the land is a factory, a shop, or an individual home, by analyzing the presence or absence of a signboard, the presence or absence of a customer, or the like.

The determining unit determines whether the registered use of the land based on the address matches the use of the land specified by the analysis.

Further, the determining unit may determine whether the registered use of the land based on the address matches the use of the land specified by the analysis, by referring to the resident register. Since the use of the land is described in the resident register, the determining unit can determine whether the registered use of the land matches the use of the land specified by the analysis.

Furthermore, the determining unit may determine whether the registered use of the land based on the address matches the use of the land specified by the analysis, by referring to a certified copy of the register. Since the use of the land is described in the certified copy of the register, the determining unit can determine whether the registered use of the land matches the use of the land specified by the analysis.

In addition, the image acquiring unit may acquire time-series images of the image-captured land. The image acquiring unit can take a temporal change into consideration by acquiring the time-series images.

Further, the use specifying unit may analyze the time-series images to specify a change in which type of use the land is used for. The use specifying unit can specify the temporal change of the use by analyzing the time series images.

Furthermore, the determining unit determines whether the registered use of the land based on the address matches the changed use of the land specified by the analysis. The determining unit can determine whether the use registered of the land based on the address matches the changed use of the land specified by the analysis, by taking the temporal change of the use of the land into consideration.

### Description of Operation

Next, a land use determination method is described. The land use determination method of the present invention is a method of determining whether the land is used in the same use as the registered use.

The land use determination method includes an image acquiring step, an address specifying step, a use specifying step, and a determining step.

The image acquiring step acquires an image of the image-captured land. The image may be a moving image or a still image. The image may be an image captured by a drone camera or a satellite camera. The camera provided in the drone may be any camera such as a digital camera or a smartphone camera. When the image is analyzed in real-time, it is preferable that the image is a real-time image.

The address specifying step analyzes the image to specify an address of the land. It is possible to specify the address using an area and shape of the land, by analyzing the image based on latitude and longitude information of the image. The accuracy of image analysis can be improved by machine learning. For example, the machine learning is performed by using past images as teacher data.

The use specifying step analyzes the image to specify what type of use the land is used for. It is possible to specify which type of the use the land is used for among a public type, a residential type, a commercial type, an industrial type, and an agricultural type, through the image analysis. For example, as shown in FIG. 2, in a case of an image of a field, it is specified that the land is used for the use of the agricultural type and the use of the residential type.

In addition, the use specifying step may specify which type of use the land is used for, by analyzing the image to specify a type of crop grown on the land. For example, it is possible specify whether the land is a private residence or a field by performing the image analysis of whether the crop is weeds or cabbage.

Further, the use specifying step may specify which type of use the land is used for, by analyzing an image to specify a growth status of the crop grown on the land. For example, it is possible to specify whether the land is the private residence or the field by performing the image analysis of whether the crop is the weeds that have been overgrown or the cabbage that has grown deliciously.

Furthermore, the use specifying step may specify which type of use the land is used for, by analyzing an image to specify a building built on the land. For example, the use specifying unit can specify whether the land is a factory, a shop, or an individual home, by analyzing the presence or absence of a signboard, the presence or absence of a customer, or the like.

The determining step determines whether the registered use of the land based on the address matches the use of the land specified by the analysis.

Further, the determining step may determine whether the registered use of the land based on the address matches the use of the land specified by the analysis, by referring to the resident register. Since the use of the land is described in the resident register, it is possible to determine whether the registered use of the land matches the use of the land specified by the analysis.

Furthermore, the determining step may determine whether the registered use of the land based on the address matches the use of the land specified by the analysis, by referring to a certified copy of the register. Since the use of the land is described in the certified copy of the register, it is possible to determine whether the registered use of the land matches the use of the land specified by the analysis.

In addition, the image acquiring step may acquire time-series images of the image-captured land. It is possible to take a temporal change into consideration by acquiring the time-series images.

Further, the use specifying step may analyze the time-series images to specify a change in which type of use the land is used for. It is possible to specify the temporal change of the use by analyzing the time series images.

Furthermore, the determining step determines whether the registered use of the land based on the address matches the changed use of the land specified by the analysis. It is possible to determine whether the use registered of the land based on the address matches the changed use of the land specified by the analysis, by taking the temporal change of the use of the land into consideration.

The means and functions described above are realized by reading and executing a predetermined program by a computer (including a CPU, an information processing device, and various terminals). The program may be, for example, an application installed on a computer, or a SaaS (software as a service) form provided from a computer via a network. The program may be provided, for example, in a form recorded in a computer-readable recording medium such as a flexible disk, a CD (CD-ROM or the like), a DVD (DVD-ROM, DVD-RAM, or the like), or the like. In this case, the computer reads the program from the recording medium and transfers the program to an internal storage unit or an external storage unit to be stored and executed. Furthermore, the program may be recorded in advance in, for example, a storage device (recording medium) such as a magnetic disk, an optical disk, an optical magnetic disk, or the like and be provided from the storage device to the computer through a communications line.

As a specific algorithm of the above-described machine learning, a nearest neighbor algorithm, a Naive Bayes algorithm, a decision tree, a support vector machine, reinforcement learning, or the like may be used. In addition, deep learning in which features for learning are generated by using a neural network may be used.

While the embodiments of the present invention have been described above, the present invention is not limited to the above-described embodiments. In addition, the effects described in the embodiments of the present invention are merely a list of the most preferable effects produced by the present invention, and the effects of the present invention are limited to those described in the embodiments of the present invention.

## Claims

1. A land use determination system for determining whether a land is used for a same use as a registered use, comprising:
an image acquiring unit that acquires an image obtained by image-capturing a land;
an address specifying unit that analyzes the image to specify an address of the land;
a use specifying unit that analyzes the image to specify a use for which the land is used; and
a determining unit that determines whether a registered use of the land based on the address matches the use of the land specified by the analysis.

2. The land use determination system according to claim 1, wherein the use specifying unit specifies the use for which the land is used, by analyzing the image to specify a type of crop grown on the land.

3. The land use determination system according to claim 1, wherein the use specifying unit specifies the use for which the land is used, by analyzing the image to specify a growth status of a crop grown on the land.

4. The land use determination system according to claim 1, wherein the use specifying unit specifies the use for which the land is used, by analyzing the image to specify a building built on the land.

5. The land use determination system according to claim 1, wherein the determining unit determines whether the registered use of the land based on the address matches the use of the land specified by the analysis, by referring to a resident register.

6. The land use determination system according to claim 1, wherein the determining unit determines whether the registered use of the land based on the address matches the use of the land specified by the analysis, by referring to a certified copy of a register.

7. The land use determination system according to claim 1, wherein the image acquiring unit acquires time-series images of the image-captured land,
wherein the use specifying unit analyzes the time-series images to specify a change in the use for which the land is used, and
wherein the determining unit determines whether the registered use of the land based on the address matches the changed use of the land specified by the analysis.

8. A land use determination method of determining whether a land is used for a same use as a registered use, comprising:
acquiring an image obtained by image-capturing a land;
analyzing the image to specify an address of the land;
analyzing the image to specify a use for which the land is used; and
determining whether a registered use of the land based on the address matches the use of the land specified by the analysis.

9. A program for causing a computer to execute:
acquiring an image obtained by image-capturing a land;
analyzing the image to specify an address of the land;
analyzing the image to specify a use for which the land is used; and
determining whether a registered use of the land based on the address matches the use of the land specified by the analysis.
